(19)

Europäisches
Patentamt
European
Patent Office
Office européen
des brevets

(11) **EP 1 783 860 B1**

(12) **EUROPEAN PATENT SPECIFICATION**

(45) Date of publication and mention
of the grant of the patent:
**27.08.2008 Bulletin 2008/35**

(51) Int Cl.:
*H01Q 1/36* (2006.01)      *H03D 1/02* (2006.01)
*H01Q 1/27* (2006.01)

(21) Application number: **06022512.5**

(22) Date of filing: **27.10.2006**

(54) **Antenna apparatus, receiving apparatus and watch using magnetic sensor**

Antennenanordnung, Empfangseinrichtung, und Uhr mittels Magnetsensors

Système d'antenne, dispositif récepteur et montre mettant en oeuvre capteur magnétique

(84) Designated Contracting States:
**DE FR GB**

(30) Priority: **28.10.2005   JP 2005314609**
**28.06.2006   JP 2006178232**

(43) Date of publication of application:
**09.05.2007   Bulletin 2007/19**

(73) Proprietor: **CASIO COMPUTER CO., LTD.**
**Shibuya-ku,**
**Tokyo 151-8543 (JP)**

(72) Inventors:
• **Someya, Kaoru,**
**c/o Casio Computer Co., Ltd.**
**Hamura-shi,**
**Tokyo 205-8555 (JP)**
• **Nomura, Keiichi,**
**c/o Casio Computer Co., Ltd.**
**Hamura-shi,**
**Tokyo 205-8555 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A2- 0 777 127          JP-A- 2000 188 558**
**US-A1- 2001 010 507       US-A1- 2004 196 198**
**US-B1- 6 232 775**

• **CHRISTIAN HAUSLEITNER ET AL: "Cordless Batteryless Wheel Mouse Application Utilizing Radio Requestable SAW Devicesin Combination with the Giant Magneto-Impedance Effect" IEEE TRANSACTIONS ON MICROWAVE THEORY AND TECHNIQUES, IEEE SERVICE CENTER, PISCATAWAY, NJ, US, vol. 49, no. 4, April 2001 (2001-04), XP011038303 ISSN: 0018-9480**

**Description**

The present invention relates to an antenna circuit using a magnetic sensor and a watch provided with the antenna circuit.

A conventional magnetism detecting device, which is employed for terrestrial magnetism detection, is known from EP 0 777 127 A2. The detecting device includes a magneto-impedance element (MI element), incorporated in an oscillation circuitry. A coil is wound around the MI element. An external magnetic field is detected based on an impedance variation in the MI element according to the external magnetic field and an alternating-current bias magnetic field, which is applied to the MI element.

A further MI element used for magnetic field detection is described in US 6,232,775 B1. A magnetic sensing circuit includes a high-frequency electrical power source section, a detecting section including the MI element, and an amplification section. The MI element comprises an alloy, the composition of which is discussed in detail. The MI element can be employed in a variety of fields, including an azimuth sensor or a magnetic head.

In recent years, a technique to form an antenna with a magnetic sensor using a MI element has been proposed (for example, see JP 2000-188558A). As disclosed in JP 2000-188558A, when minute radio frequency current is applied to a soft magnetic material formed in wire shape, ribbon shape or the like, there occurs output voltage across the soft magnetic material due to the impedance thereof. The magneto-impedance effect represents an effect that impedance of soft magnetic material changes sensitively when external magnetic field is applied thereto so that output voltage across the soft magnetic material changes.

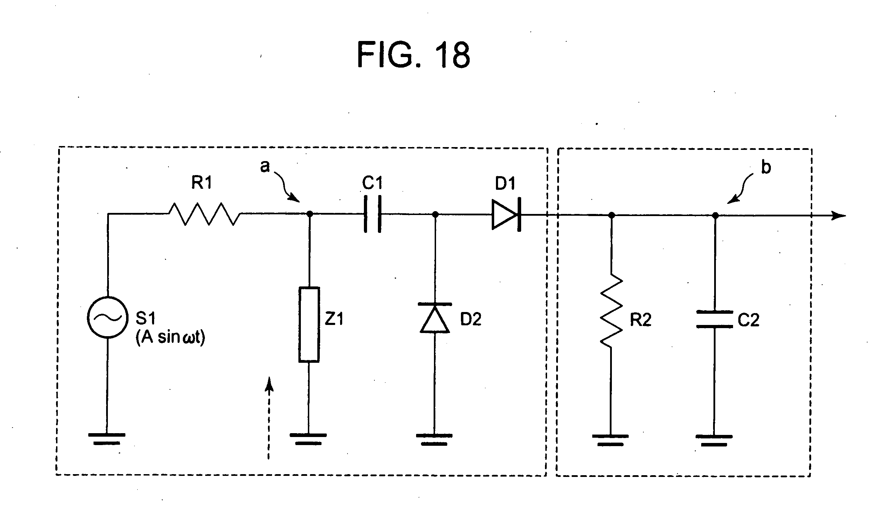

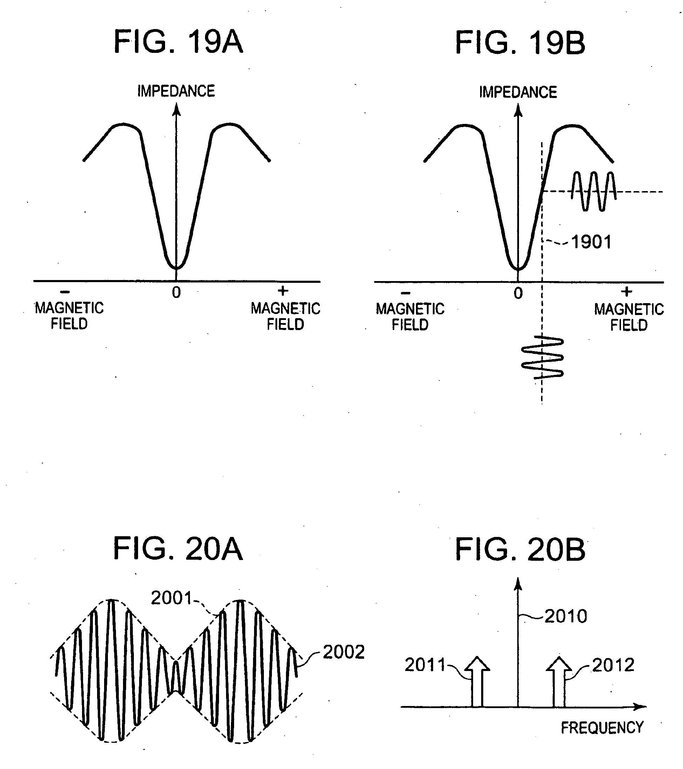

FIG. 18 is one example of an antenna circuit to detect magnetism by a magnetic sensor using a MI element (hereinafter referred to as "MI magnetic sensor") and a filter circuit following after the antenna circuit. In the Figure, S1, R1, C1 and Z1 represent a radio-frequency signal generator, a resistance, a condenser and a MI magnetic sensor, respectively. In the magnetism detection circuit of FIG. 18, a radio-frequency signal from the radio-frequency signal generator S1 is distributed to the resistance R1 and MI magnetic sensor Z1, and is output through the condenser C1. When AC magnetic field shown as a dashed line is applied to the MI magnetic sensor Z1, the signal of the radio-frequency signal generator S1 is distributed according to the correlation between the magnetic field and impedance of the MI magnetic sensor shown in FIG. 19A, so that the signal shows magneto-impedance change according to the AC magnetic field. Since the magnetic field changes between plus and minus and the output is based on an even function having an axisymmetric sin curve, the frequency component of the output becomes twice as much as the original frequency.

When fixed magnetic field (see reference numeral 1901) as shown in FIG. 19B is further applied, change of external magnetic field is output with being centered on this fixed magnetic field. Since the curve is approximately linear around the fixed magnetic field in FIG. 19B, the resistance changes in proportion to external magnetic field. That is, since the inversion due to the above-described axisymmetric curve does not occur, the magnetic resistance change have the same frequency.

In the antenna circuit of FIG. 18, the signal at point a is represented as $A\sin\omega t$ according to S1, and the voltage at point a is represented as $Va = A\sin\omega t Z1/(R1+Z1)$ according to the magnetic sensor exposed to magnetic field change.

Since the MI magnetic sensor Z1 has variable impedance according to magnetic field change, Z1 can be represented as $Z1=Z(1+B\sin pt)$. Here, since $B<<1$, the equation of Va can be transformed as follows.

$$Va = A\sin\omega t \cdot Z1 \ (R1+Z1)$$

$$= A\sin\omega t \cdot Z(1+B\sin pt)/(R1+Z(1+B\sin pt))$$

$$\approx A\sin\omega t \cdot Z(1+B\sin pt)/(R1+Z) \quad ...(1)$$

Formula (1) has the same format as that of amplitude modulation (AM), which shows that the signal of the radio-frequency signal generator S1 is subject to amplitude modulation according to magnetic field frequency. On the other hand, the signal of the radio-frequency signal generator S1 is a radio-frequency signal for generating skin effect of the magnetic sensor. The impedance change in the magnetic sensor modulates the signal of the radio-frequency signal generator S1. As shown in FIG. 20A, the signal of the radio-frequency signal generator S1 is modulated to be a state represented by reference numeral 2002 according to magnetic field change (see reference numeral 2000). Thus, a waveform as shown in FIG. 20A is propagated from point a or the condenser C1. By employing a configuration to receive this waveform with a circuit equivalent to a AM receiver, it becomes possible to receive magnetic field change. Here, since the modulated signal has been subject to amplitude modulation, there occurs side bands 2011 and 2012 with respect to a carrier signal 2010 as shown in FIG. 20B. Since these side bands changes according to magnetic field change, it is preferable to detect them. However, as shown in formula (1), the value of B is very small (several percent), the side bands are extremely small with respect to the carrier.

Here, receiver sensitivity is to be considered. When it is assumed a general wave clock has receiver sensitivity of 40 dBμ/m for example, the sensitivity can be converted to $10^{-8}$Oe ($1 \text{Oe} \approx 79.6$ A/m). According to a magnetic permeability of vacuum, it can be regarded that $1 \text{Oe} \approx 1\text{G}$. Accordingly, it is required that an antenna applied to a wave clock has sensitivity of $10^{-8}$G.

However, a MI sensor of earlier development having a normal sensor shape has sensitivity of about 50 mV/G. Even if the sensor can detect 1 μV signal, detection of magnetic field becomes $1/(5 \times 10^4)$ thereof. That is, although $10^{-8}$ G receiving sensitivity is required, only reception at $2 \times 10^{-5}$ G sensitivity is possible. Thus, a MI sensor of earlier development is lacking in sensitivity for a wave clock.

In order to improve sensitivity, the following means could be given.

(1) To devise shape of a MI sensor itself to reduce effect of demagnetizing field.
(2) To improve detection accuracy of side bands

An object of the present invention is to improve detection accuracy of side bands.

For example, it is assumed that a received signal (40 KHz) has C/N of 140 dB with respect to a 20 MHz signal of the radio-frequency signal generator S1, and that the signal of S1 is applied to the resistance R1 at 3 Vrms. It is preferable for reducing power consumption that impedance of S1 side at a point (point a) between the resistance R1 and MI magnetic sensor Z1 is large. Accordingly, when it is assumed that R1 = Z1 = 1 MΩ, the impedance of S1 side becomes 500 kΩ. In this case, thermal noise value Vn is given as follows when it is assumed that bandwidth B is 10 Hz and absolute temperature T is 300.

$$\text{Vn} = 20\log\sqrt{(4\text{kBTR})} = -77.8 \text{ dB}\mu + 10\log(\text{BR})$$

$$= -77.8 + 67.0 = -10.8\text{dB}\mu = 0.29 \ \mu\text{Vrms}$$

The total noise value is 3.01 μVrms, and applied signal noise is predominant among them.

In order to reduce the above thermal noise, application of signal correlation is known. Thus, synchronous detection may be employed using a phase comparator 81, a low-pass filter 82, a oscillator 83 and a mixer 84 as shown in FIG. 21, instead of the envelope detector circuit provided with diodes D1 and D2 as shown in FIG. 18. However, in the synchronous detection of earlier development as shown in FIG. 21, it is problematic that synchronization using the phase comparator 81 and oscillator 83 is difficult due to noise.

Further, a magnetic sensor disclosed in JP 2000-188558A detects magnetic field change in wide frequency range because of lacking filter property. Thus, it is impossible to detect only magnetic field change at specific frequency.

Such configuration requires a tuning circuit to select desired frequency component provided at a later stage of an antenna section. Moreover, since such receiving apparatus uses an MI sensor, it requires a radio-frequency AC power source (driving circuit) to drive a magneto-impedance element. As a result, size of the antenna section becomes comparatively large.

It is an object of the present invention to provide an antenna circuit in which detection accuracy of side bands is improved by reducing noise from a radio-frequency signal generator with a comparatively simple circuit, a receiving apparatus which can detect a desired signal from received electric wave and a watch provided with the receiving apparatus.

This is achieved by the features of the independent claim.

According to one aspect of the invention, a radio-frequency signal is applied to a magnetic field detecting unit having an electrical property which changes in accordance with a magnetic field change, at least a part of the radio-frequency signal is reduced from the obtained received signal, and the processed received signal is detected.

According to another aspect of the invention an antenna apparatus comprises: an detecting circuit to detect a received signal obtained by applying a radio-frequency signal to an magnetic field detecting element having an electric property which changes in accordance with magnetic field change, wherein the detecting circuit comprises a synchronous detection circuit to take in the radio-frequency signal or a level-adjusted radio-frequency signal and perform a synchronous detection with the taken-in signal.

According to another aspect of the invention, a signal corresponding to a standard frequency broadcast including time information, which is obtained by the above-described antenna apparatus, is amplified, and the amplified signal is detected and demodulated. Time information is extracted from the demodulated signal, and a time counted by a time counting circuit is corrected based on the extracted time information.

According to another aspect of the invention, a magnetic field detecting element having an electric property which changes in accordance with a magnetic field change and a resonant circuit connected with the magnetic field detecting circuit are included, a magnetic field change of a predetermined frequency is retrieved as an electric signal from a magnetic field change which is detectable by the magnetic field detecting element with a resonant effect of the resonant circuit, and the retrieved signal is a received signal of an electric wave of the predetermined frequency.

According to another aspect of the invention, a magnetic field detecting element having an electric property which changes in accordance with a magnetic field change and a resonant circuit connected with the magnetic field detecting circuit are included, a magnetic field change of a predetermined frequency is retrieved as an electric signal from a magnetic field change which is detectable by the magnetic field detecting element with a resonant effect of the resonant circuit, the retrieved signal is a received signal of an electric wave of the predetermined frequency, and the received signal is amplified and detected.

According to another aspect of the invention, a time counting circuit to count time, time display unit to display time counted by the time counting unit, a magnetic filed detecting element having an electric property which changes in accordance with a magnetic field change, and a resonant circuit connected with the magnetic field detecting circuit are included. A carrier signal carrying time information is retrieved from a magnetic field change which is detectable with the magnetic field detecting element is amplified and detected. The time information is extracted from the amplified and detected signal, and the time counted by the time counting circuit is corrected based on the extracted time information.

FIG. 1 is a front view of a watch provided with a receiving circuit of the present embodiment;

FIG. 2 is a cross section view of FIG. 1 along with line A-A' (a cross section view along with twelve-six);

FIG. 3 is a block diagram showing an internal configuration of a circuit of a wrist watch 1 of the present embodiment;

FIG. 4 is a block diagram showing an outline of a receiving circuit 44 of the present embodiment;

FIG. 5 shows an antenna circuit and a LPF following after the antenna circuit of a first embodiment;

FIGs. 6A and 6B are views to explain frequency component of a modulated signal;

FIG. 7 shows an antenna circuit of a second embodiment;

FIG. 8 shows an antenna circuit of a third embodiment;

FIG. 9 shows an antenna circuit and a LPF following after the antenna circuit of a fourth embodiment;

FIG. 10 shows signals at points p, q, r, s and t in FIG. 9;

FIG. 11 shows an antenna circuit of a fifth embodiment;

FIG. 12 shows an antenna circuit of a sixth embodiment;

FIG. 13 shows an antenna circuit of a seventh embodiment;

FIG. 14 shows an antenna circuit of a eighth embodiment;

FIG. 15 shows a configuration of a rise and decay detection circuit;

FIG. 16 shows a signal at each point of the antenna circuit of the eighth embodiment;

FIG. 17 shows an example of a signal in an antenna circuit of earlier development;

FIG. 18 shows one example of an antenna circuit which detects magnetic field by using a MI magnetic sensor and a filter circuit following after the antenna circuit;

FIGs. 19A and 19B show a correlation between magnetic field and impedance;

FIG. 20A shows an example of radio-frequency signal modulated by magnetic field change, and

FIG. 20B is a view to explain the modulated frequency component;

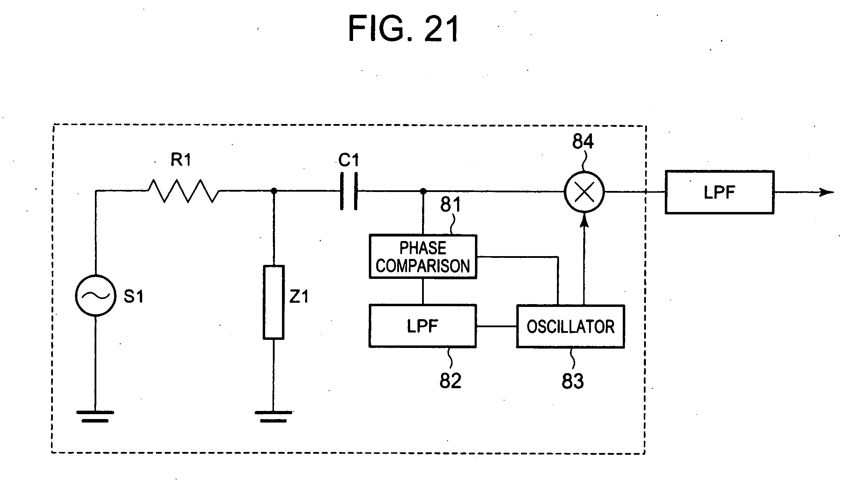

FIG. 21 shows an antenna circuit and a filter circuit following after the antenna circuit of earlier development;

FIG. 22 is an internal block diagram of a wrist watch;

FIG. 23 shows an example of circuit configuration of a reception control circuit section;

FIGs. 24A and 24B show an example of correlation between external magnetic field and impedance change of a magnetoresistance element caused by the external magnetic field;

FIG. 25 is an example of circuit configuration of a reception control circuit section in which a LC resonant circuit is employed;

FIG. 26 is an example of circuit configuration of a reception control circuit section in which an antiresonant circuit is employed;

FIG. 27 is an example of circuit configuration of a reception control circuit section in which a magnetic sensor and a resonant circuit are connected in series;

FIG. 28 is an example of circuit configuration of a reception control circuit section in which a receiving frequency is switchable;

FIG. 29 is an example of circuit configuration of a reception control circuit section in which a receiving frequency is switchable;

FIG. 30 is an example of circuit configuration of a reception control circuit section in which a receiving frequency is switchable; and

FIG. 31 is an example of circuit configuration of a reception control circuit section in which a receiving frequency is switchable.

[Wrist watch]

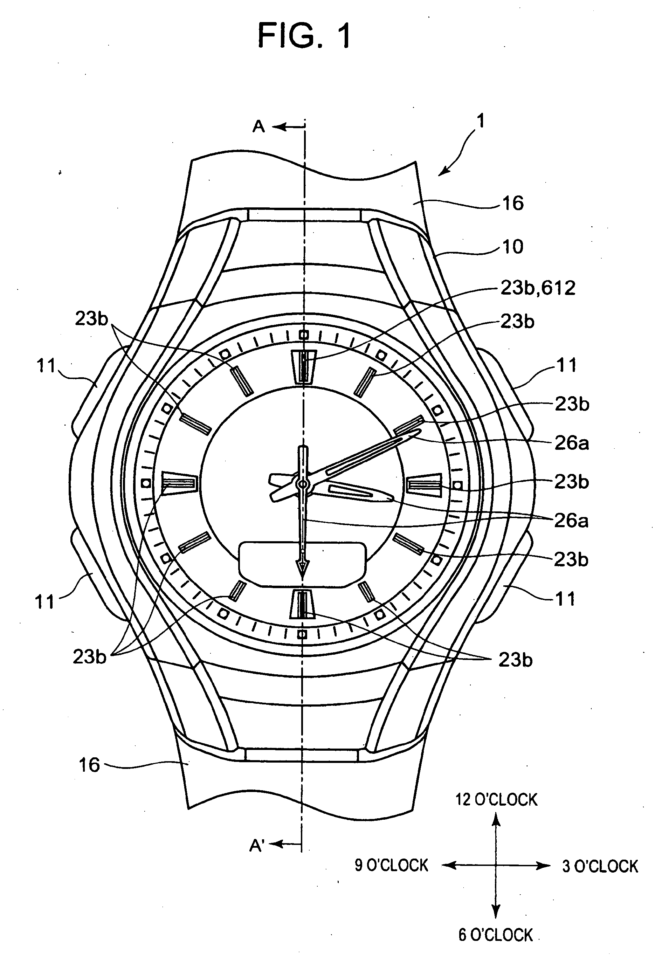

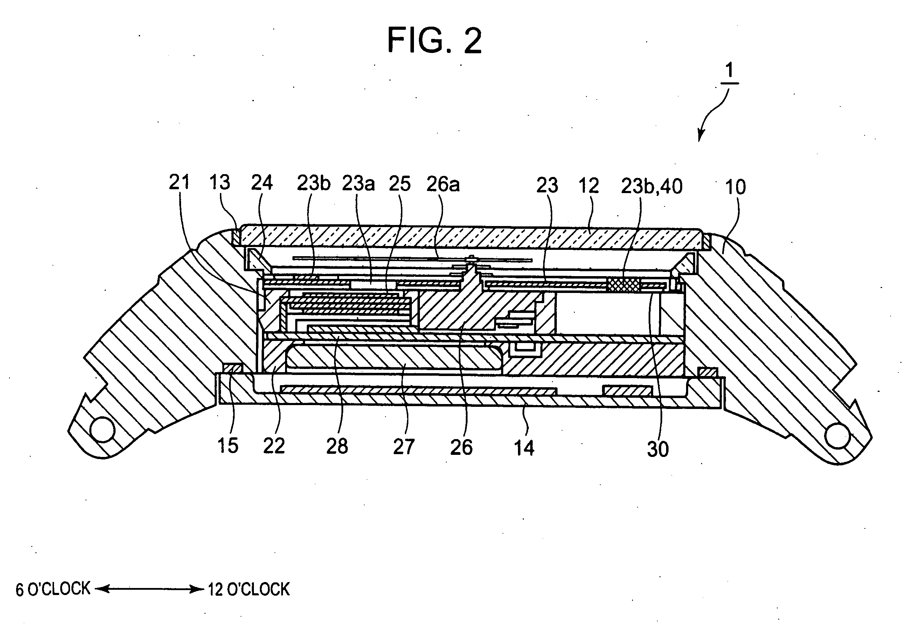

Hereinafter, embodiments of the present invention will be described with reference to the attached drawings. FIGs. 1 and 2 are a front view of a wrist watch provided with a receiving circuit of the present embodiment and a cross section view thereof along with line A-A' (cross section view along with twelve-six), respectively. A wrist watch 1 comprises a watch case 10 to house a watch module and the like to inside thereof. A watch band 16 for a user to wear the wrist watch on his wrist is attached to a circumference of the watch case 10 at the positions of twelve and six o'clock. A switch 11 to execute various functions of the wrist watch 1 is provided on a circumference side wall of a wrist watch 10.

The watch case 10 is made of metal such as stainless steel and titan, and is formed to be a ring-shaped short column. Protrusions to attach the watch band 16 are formed at the positions lateral to each of six and twelve o'clock positions, and holes to fit in pins to attach the watch band 16 are formed on the protrusions.

A watch glass 12 is fitted on the upper end of the watch case 10 via a sealing member 13 so as to cover the upper end. A case back 14 is attached on the lower end of the watch case 10 via a gasket 15 so as to cover the lower end. The case back 14 is approximately a thin plate made of a metal having high strength.

An upper housing 21 and a lower housing 22 are disposed to inside of the watch case 10, where each of the circumferences thereof is attached to a middle frame provided on an inner circumference of the watch case 10.

A printed-wiring assembly 30 is disposed on an upper face of the upper housing 21, and a dial 23 is disposed on the printed-wiring assembly 30. A ring-shaped dial cover 24 is disposed on an upper face of the dial 23 with being contacted to peripheral edge of the watch glass. A liquid crystal display panel 25 is disposed below a opening 23a which is formed on the dial 23 at a position near six o'clock, the panel being supported by the upper housing 21. That is, when the watch 1 is seen from the front side, time displayed on the liquid crystal display 25 can be observed visually through the watch glass 12.

On an upper face of the dial 23, twelve marks 23b formed in approximately rectangular shape in their plain view are provided at even internals in circumference direction. These marks 23b correspond to 1 to 12 o'clocks respectively. In the present embodiment, an MI magnetic sensor 40 using a magnetoresistance element whose magnetoresistance changes according to external magnetic field is formed at the mark 23b corresponding to 12 o'clock among these marks 23b. This MI magnetic sensor 40 functions as an antenna to receive standard frequency broadcast. The MI magnetic sensor 40 comprises a magnetic material patterned on an upper surface of the printed-wiring assembly 30, and the upper face of the MI magnetic sensor 40 is exposed from an opening formed on a dial plate 23 at the corresponding position.

The upper housing 21 comprises an analogue clock hands mechanism 26 approximately at a center of the watch case 10. The analogue clock hands mechanism 26 comprises a hand spindle projected upwardly from a spindle hole formed at the center of the dial 23 and clock hands 26a such as an hour hand and minute hand, and moves the clock hands 26a over the dial 23.

A battery 27 is incorporated in the lower housing 22. The analogue clock hands mechanism 26 and a circuit board 28 connected to the antenna circuit 42 are disposed between the upper housing 21 and lower housing 22.

Various circuit components are disposed on the circuit board 28. The circuit components include a control IC such as a CPU, a time count circuit comprising a oscillator circuit to count current time, and an antenna circuit (the MI magnetic sensor 40 of the antenna circuit is formed in the mark 23b), and also include a receiving circuit including the antenna circuit to amplify and detect an output signal of the antenna circuit so as to retrieve a time code signal included in the standard frequency broadcast. The control IC corrects the current time of the time count circuit based on the time code in the signal retrieved by the receiving circuit, and displays the corrected time to the liquid display panel 25. Alternatively, the control IC controls the analogue clock hands mechanism 26 to move the clock hands 26a.

[Circuit configuration]

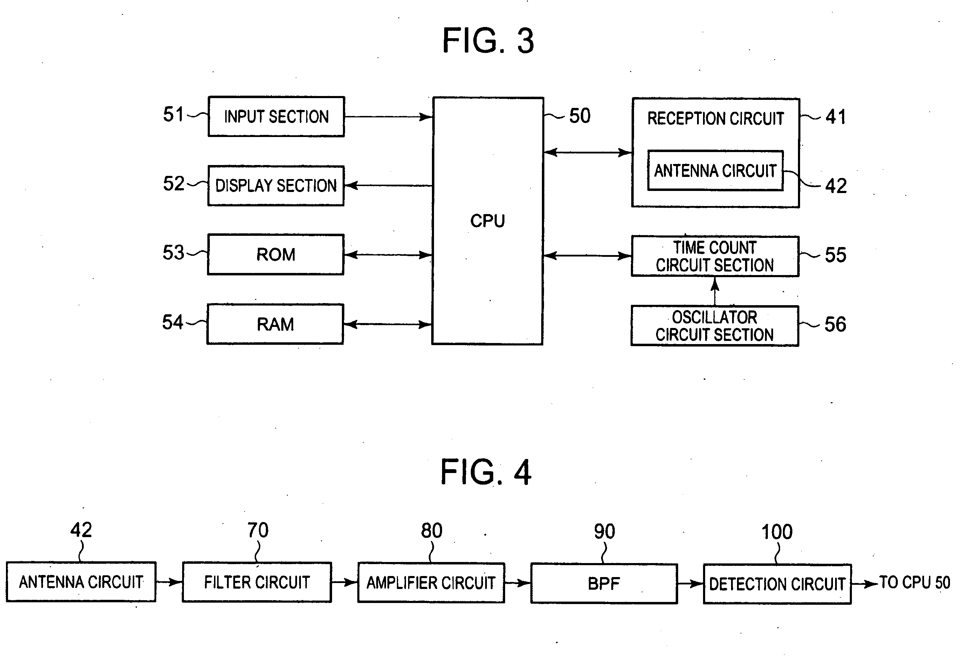

FIG. 3 is a block diagram showing internal configuration of the circuit of the wrist watch 1 according to the present invention. As shown in FIG. 3, the wrist watch 1 comprises a CPU 50, an input section 51, a display 52, a ROM 53, a RAM 54, a receiving circuit 44, a time count circuit section 55 and an oscillator circuit section 56.

The CPU 50 reads out a program stored in the ROM 53 at a predetermined timing or according to an operation signal input from a input section 200, expands it to the RAM 54, and executes directions to the components of the wrist watch 1 and transfer of a data. Specifically, the CPU 50 controls the receiving circuit 44 in predetermined time intervals to receive standard frequency broadcast and corrects a current time data counted in the time count circuit section 55 based on the time code signal from the receiving circuit 44. Further, the CPU 50 transfers the current time counted by the time count circuit section 55 to the display 52.

The input section 51 includes a switch 11 to accept directions to execute various functions of the wrist watch 1. When the switch 11 is operated, it outputs a corresponding operation signal to the CPU 50. The display 52 includes the dial 23, analogue clock hands mechanism 26 controlled by the CPU 50 and liquid crystal display 25. The display 52 displays the current time counted by the time count circuit section 55. The ROM 53 stores a system program, application program and data to operate the wrist watch 1 and to realize a predetermined function. The RAM 54 functions as a working area of the CPU 50, and temporarily stores a program and data read out from the ROM 53 and a data processed by the CPU 50.

As is described in detail below, the receiving circuit 44 includes the antenna circuit 42, and retrieves a signal of a predetermined frequency from the signal received by the antenna circuit 42 and outputs the retrieved signal to the CPU 50. The time count circuit section 55 counts the current time by counting the signal input from the oscillator circuit section 56, and outputs a current time data to the CPU 50. The oscillator circuit section 56 constantly outputs a clock signal of constant frequency.

FIG. 4 is a block diagram showing an outline of the receiving circuit 44. As shown in FIG. 4, the receiving circuit 44 comprises the antenna circuit 42, a low-pass filter (LPF) 70, an amplifier circuit 80, a LPF 90 and a detection circuit 100.

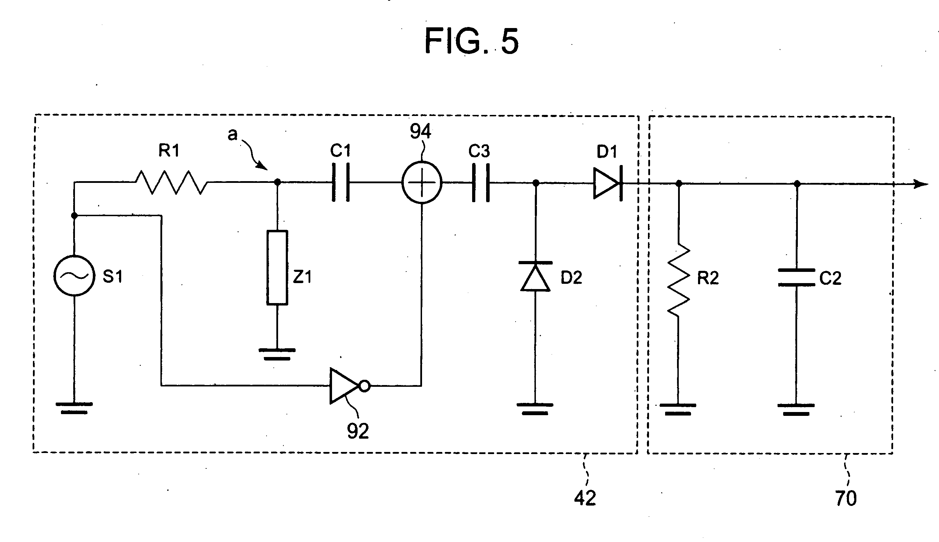

The antenna circuit 42 includes, as shown in FIG. 5, the radio-frequency signal generator S1, resistance R1, MI magnetic sensor Z1 (reference numeral 40 in FIG. 1), condenser C1 and diodes D1 and D2.

As described above, the antenna circuit 42 outputs the signal corresponding to standard frequency broadcast, and the signal is input to the detection circuit 100 through the LPF 70, amplifier circuit 80 and LPF 90. The detection circuit 100 demodulates the signal of standard frequency broadcast. The demodulated signal is input to and decoded in the CPU 50 to extract time information.

[First embodiment]

Hereinafter, the antenna circuit of the present invention is described in more detail. FIG. 5 shows an antenna circuit and a LPF following after the antenna circuit of the first embodiment. As shown in FIG. 5, the antenna circuit 42 of the first embodiment comprises a radio-frequency signal generator S1, a resistance R1, a condenser C1, a MI magnetic sensor Z1 and diodes D1 and D2, as same as the antenna circuit shown in FIG. 18.

The radio-frequency signal generator S1 generates 20 MHz signal, for example. The radio-frequency signal generator S1 is connected to one end of the resistance R1. The other end of the R1 is connected to each one end of the MI magnetic sensor Z1 and condenser C1. The diodes D1 and D2 function as an envelope detector circuit.

In the present embodiment, the antenna circuit 42 further comprises an inverter 92 to take in a radio-frequency signal from the radio-frequency signal generator S1, to invert the input radio-frequency signal and to output an inversion signal, and an adder 94 placed between the other end of the condenser C1 and the envelope detector circuit in which one input terminal is connected to the other end of the condenser C1, the other input terminal is connected to an output of the inverter 92 and an output terminal is lead to the envelope detection circuit. The LPF 70 connected after the antenna circuit 42 is as same as that shown in FIG. 18.

Operation of the antenna circuit 42 of such configuration is explained. As described above, voltage Va at point a of the antenna circuit 42 can be represented as follows.

$$Va \approx Asin\omega t \cdot Z(1+Bsinpt)/(R1+Z) \quad \ldots \quad (1)$$

(Asin$\omega$t: signal of the radio-frequency signal generator S1, Z(1+Bsinpt): signal of the magnetic sensor)

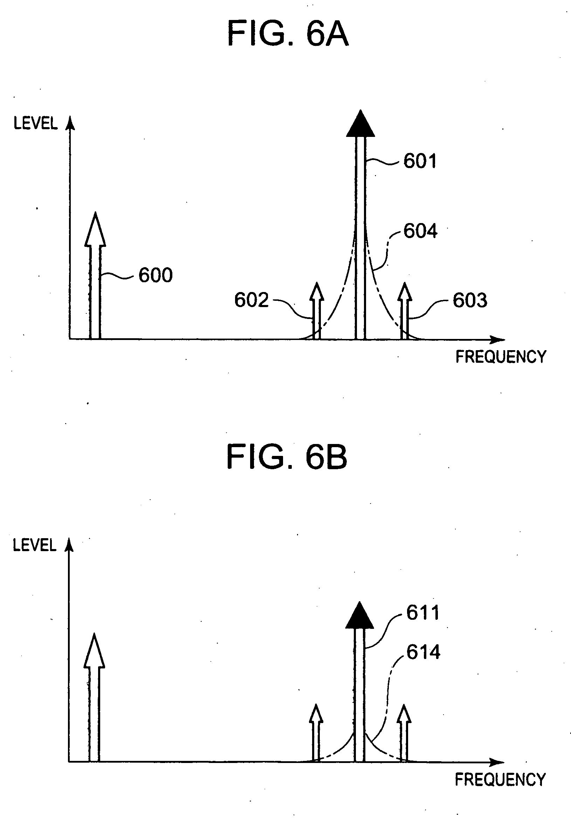

As shown in formula (1), the modulated signal has the same formula as that of amplitude modulation, and the formula shows that the signal of S1 is subject to amplitude modulation according to magnetic field frequency. Therefore, as shown in FIG. 6B, side bands 602 and 603 occurs both sides of a carrier signal 601 of the radio-frequency signal generator S1. In FIG. 6A, reference numeral 600 represents a receiving signal of standard frequency broadcast. Since the carrier signal includes an applied signal noise (see reference numeral 604), it is difficult to detect the side bands due to this noise. In the present embodiment, an inversion signal of the carrier signal of the radio-frequency signal generator S1 is added to the modulated signal, so that the carrier signal level is reduced as shown in FIG. 6B (see reference numeral 611 of FIG. 6B). Since the noise component is also reduced according to the reduction of the carrier signal level, it becomes easy to detect the side bands.

It is preferable that the inversion signal level is determined so that the carrier signal level of the modulated signal after adding the inversion signal is more than twice as much as the side bands level thereof. By doing so, the modulated signal after adding the inversion signal is not overmodulated, and the signal can be detected with the envelope detector circuit as shown in FIG. 5.

According to the present embodiment, the MI magnetic sensor drives with a radio-frequency signal to generate the modulated signal according to magnetic field change. The inversion signal of the radio-frequency signal is synthesized to the modulated signal to cancel the carrier signal, i.e. radio frequency signal. As a result, it becomes possible to extract side bands with high purity, and to improve sensitivity of the antenna circuit.

[Second embodiment]

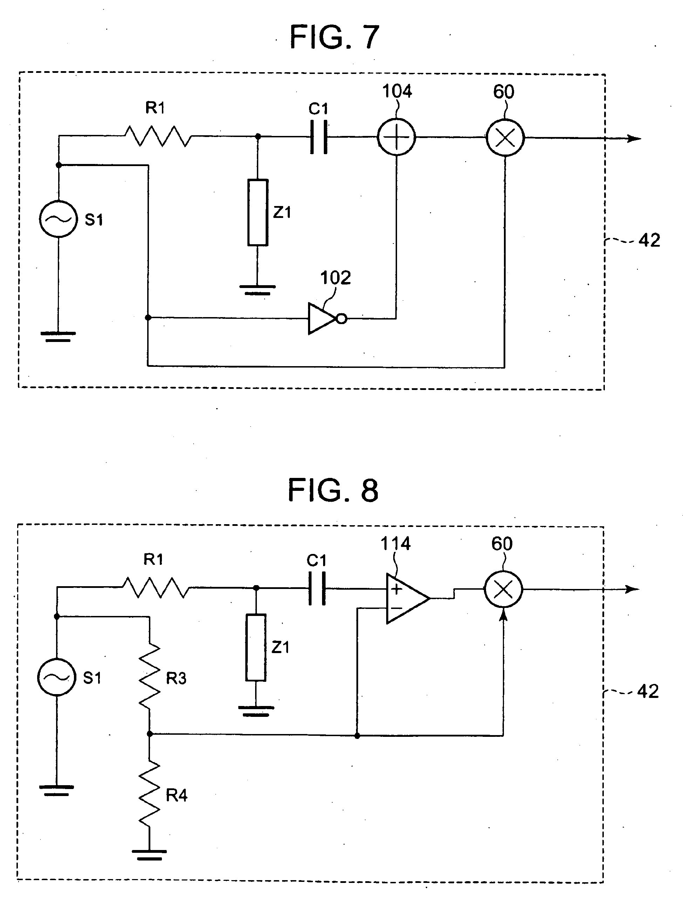

Next, a second embodiment of the present invention is described. FIG. 7 shows an antenna circuit of the second embodiment of the present invention. Similar to the first embodiment, an antenna circuit 42 comprises a radio-frequency signal generator S1, a resistance R1, a condenser C1 and an MI magnetic sensor Z1. Further, the antenna circuit 42 of the second embodiment comprises, similar to the first embodiment, an inverter 102 to invert a radio-frequency signal from the radio-frequency signal generator S1 to output an inversion signal, and an adder 104 in which one input terminal is connected to the other end of the condenser C1, the other input terminal is connected to an output of the inverter 102. In the second embodiment, the antenna circuit 42 further comprises a mixer 60 in which one input terminal is connected to an output of the adder 104 and the other input terminal is connected to an output of the radio-frequency signal generator S1.

Also in the antenna circuit 42 of the second embodiment, since an inversion signal of the signal of radio-frequency signal generator S1 is added, carrier signal level of the modulated signal reduces. Here, when there is a possibility of the carrier signal level being not more than twice as much as side bands level in the adder 104, the mixer 60 can be installed instead of the envelope detector circuit. In this case, synchronous detection is performed by multiplexing the modulated signal and inversion signal.

In the present invention, a radio-frequency signal output from the radio-frequency signal generator S1 is the carrier signal. Therefore, synchronous detection is performed only by adding the signal from the radio-frequency signal generator as it is (at the same phase). Similar to the first embodiment, since the carrier signal level is reduced, the noise component also can be reduced. Thus, it becomes easy to detect the side bands.

According to the second embodiment, the modulated signal can be detected to extract side bands regardless of reduction level of the carrier signal. Thus it becomes possible to improve sensitivity of the antenna circuit.

[Third embodiment]

In the first and second embodiments, an inversion signal of a carrier signal is added to cancel the carrier signal. In the third embodiment, a differential amplifier is utilized to cancel the carrier signal. FIG. 8 shows an antenna circuit of the third embodiment.

The antenna circuit 42 of the third embodiment comprises a radio-frequency signal generator S1, a resistance R1, a condenser C1 and an MI magnetic sensor Z1. In the third embodiment, a signal line wired from the radio-frequency signal generator S1 is connected to a resistance R3. The resistance R3 is connected to a resistance R4.

A signal line wired from the condenser C1 is connected to a plus input terminal of a differential amplifier 114, and a signal line wired from midway of the resistance R3 and R4 is connected to a minus input terminal of the differential amplifier 114. A signal line from output of the differential amplifier 114 is connected to one input terminal of a mixer 60. The signal line wired from midway of the resistance R3 and R4 is also connected to the other input terminal of the mixer 60.

In the present embodiment, it is preferable that the impedance of each element is configured to be R1=R3=R4=Z1. However, the impedance is not limited thereto. When the impedance is configured so, a level-adjusted radio-frequency signal input to the minus input terminal of the differential amplifier 114 cancels a carrier component of the modulated signal input to the plus input terminal of the differential amplifier 114. That is, in the absence of magnetic field, the signal input to the minus input terminal of the differential amplifier 114 approximately cancels the signal input to the plus input terminal of the differential amplifier 114. Thus, the signal output from the differential amplifier 114 is overmodulated. However, it is possible to extract side bands by employing synchronous detection.

According to the third embodiment, the carrier component of the modulated signal is removed with the differential amplifier, and the modulated signal in which appreciable part of the carrier component has been removed is subject to synchronous detection, so as to extract side bands. As a result, it becomes possible to improve sensitivity of the antenna circuit.

[Fourth embodiment]

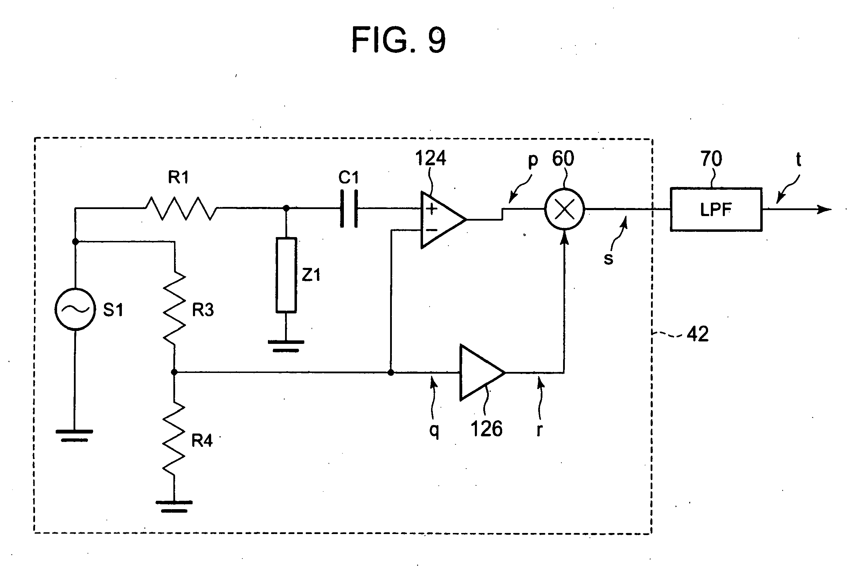

As shown in FIG. 9, in the fourth embodiment, a pulse signal (rectangular wave) is applied through a comparator 126, instead of applying the signal at the midway of the resistance R3 and R4 to the mixer 60 as shown in the antenna circuit of the third embodiment. Similar to the third embodiment, it is preferable that the impedance of each element is R1=R3=R4=Z1 in the antenna circuit of the fourth embodiment. By configuring so, a radio-frequency signal input to a minus input terminal of a differential amplifier 124 cancels a carrier component of the modulated signal input to a plus input terminal of the differential amplifier 124.

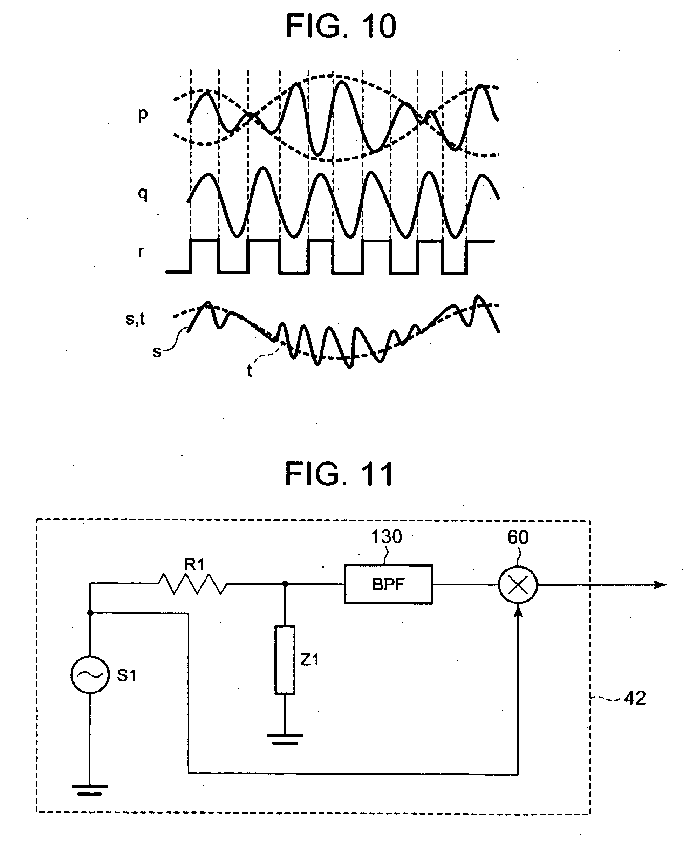

FIG. 10 shows signals of points p, q, r, s and t of FIG. 9. As shown in FIG. 10, the signal at point p corresponding to output of the differential amplifier 124 is overmodulated. When it is assumed the radio-frequency signal generator S1 generates a signal represented by $A\sin\omega t$, a signal represented by $(A/2)\sin\omega t$ at point q is input to the comparator 126.

Accordingly, at point r, a pulse signal (rectangular wave) synchronizing to the signal at point q is output. The signal which has been subject to synchronous detection by the mixer 60 (see point s) is filtered through a LPF 70, so that a signal showing magnetic field change (see point t) can be obtained.

In the fourth embodiment, the comparator 126 converts the signal to be input to the mixer 60 to a pulse. By doing so, the antenna circuit 42 can be constructed with an IC such as C-MOS. Further, since the comparator 126 converts the radio-frequency signal to a pulse, it becomes possible to reduce power consumption of the antenna circuit 42.

[Fifth embodiment]

Next, a fifth embodiment of the present invention is described. In the first to fourth embodiments, a carrier signal of the modulated signal is cancelled for enabling to extract the side bands appropriately, in order to improve sensitivity of the antenna circuit. In the fifth embodiment, an antenna circuit which can reduce thermal noise is provided.

FIG. 11 shows the antenna circuit of the fifth embodiment. As shown in FIG. 11, the antenna circuit 24 of the fifth embodiment comprises a radio-frequency signal generator S1, a resistance R1, a condenser C1, an MI magnetic sensor Z1 and a mixer 60. A radio-frequency signal from the radio-frequency signal generator S1 as well as the modulated signal is applied to the mixer 60.

Synchronous detection of the earlier development requires an LPF 82, a local oscillator 83 and a phase comparator 84 as shown in FIG. 20, in order to apply a signal having same phase as that of a carrier signal of a modulated signal. On the other hand, it is desirable for the antenna circuit 42 of the present embodiment that the radio-frequency signal generator S1 generates a radio-frequency signal and the radio-frequency signal is removed from the modulated signal as a carrier signal. Since the signal from the radio-frequency signal generator S1 is applied to the mixer 60, it becomes possible to perform stable and precise synchronous detection without phase synchronization.

Further, the present invention is successful in removing a defect of a circuit of earlier development regarding synchronous detection in weak magnetic field. Thus, it becomes possible to improve sensitivity of the antenna circuit.

[Sixth embodiment]

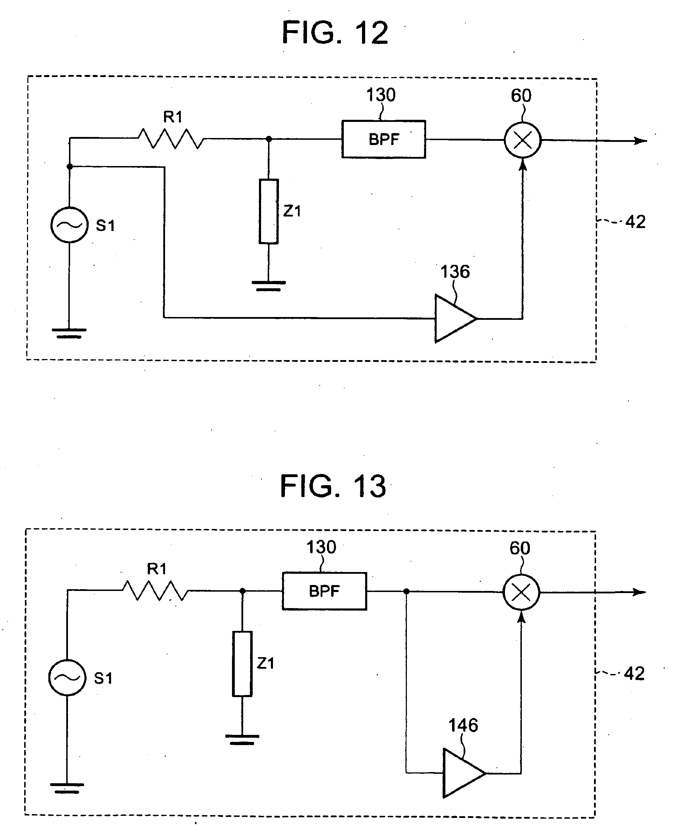

FIG. 12 shows an antenna circuit of the sixth embodiment. As shown in FIG. 12, the sixth embodiment is configured so that a pulse signal (rectangular wave) is applied through a comparator 136, instead of applying the signal of the radio-frequency signal generator S1 to the mixer 60 as shown in the antenna circuit of the fifth embodiment. The relation of the sixth embodiment to the fifth embodiment approximately corresponds to the relation of the fourth embodiment to the third embodiment.

Operation of an antenna circuit 42 of the sixth embodiment is as same as that of the fifth embodiment. In the sixth embodiment, a comparator 136 converts a signal to be input to the mixer 60 to a pulse. By doing so, the antenna circuit 42 can be constructed with an IC such as C-MOS. Further, the comparator 136 converts the radio-frequency signal to a pulse. Thus, it becomes possible to reduce power consumption of the antenna circuit 42.

[Seventh embodiment]

FIG. 13 shows an antenna circuit of a seventh embodiment. As shown in FIG. 13, output of a condenser C1, i.e. the modulated signal, is input to a comparator 146 and output of the comparator 146 is applied to a mixer 60, so as to perform synchronous detection, instead of inputting the signal of the radio-frequency signal generator S1 to the comparator and applying the pulse signal (rectangular signal) having the same cycle as the radio-frequency signal to the mixer 60. That is, a pulse signal (rectangular wave) having the same cycle and phase as the radio-frequency signal is generated according to the modulated signal, and applies it to the mixer 60, so as to obtain similar effect to that of the fifth and sixth embodiment, instead of applying the radio-frequency signal (or corresponding rectangular wave) to the mixer as it is and multiplying. The present embodiment is particularly effective when the modulated signal is sufficiently high.

[Eighth embodiment]

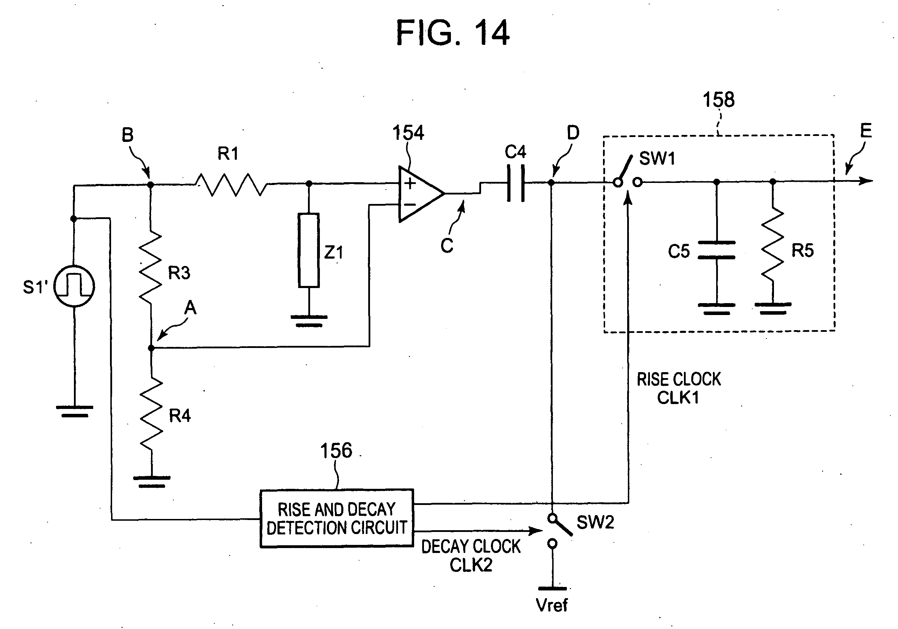

Next, an eighth embodiment of the present invention is described. FIG. 14 shows an antenna circuit of the eighth embodiment. As shown in FIG. 14, an antenna circuit 42 of the eighth embodiment comprises a radio-frequency signal generator S1', resistances R1, R3 and R4, an MI magnetic sensor Z1, a condenser C4, a differential amplifier 154, a rise and decay detection circuit 156, a sample-hold circuit 158 comprising a switch SW1, a condenser C5 and a resistance R5, and a switch SW2.

In the eighth embodiment, the differential amplifier 154 is utilized similar to the third embodiment. A radio-frequency signal of the radio-frequency signal generator S1' is adjusted in level at the resistance R3 and R4 and is applied to a minus input terminal of the differential amplifier 154, while the modulated signal is applied to a plus input terminal of the differential amplifier 154. It is preferable that the impedance of each element is configured to be R1=R3=R4=Z1. However the impedance is not limited thereto. By configuring so, the level-adjusted radio-frequency signal input to a minus input terminal of the differential amplifier 154 cancels a carrier component of the modulated signal input to the plus input terminal of the differential amplifier 154.

In the eighth embodiment, the radio-frequency signal generator S1' does not output sin wave but rectangular wave. The rectangular wave includes a lot of high frequency component compared with sin wave of the same wavelength. Accordingly, it is advantageous because it easily causes skin effect of the MI magnetic sensor Z1.

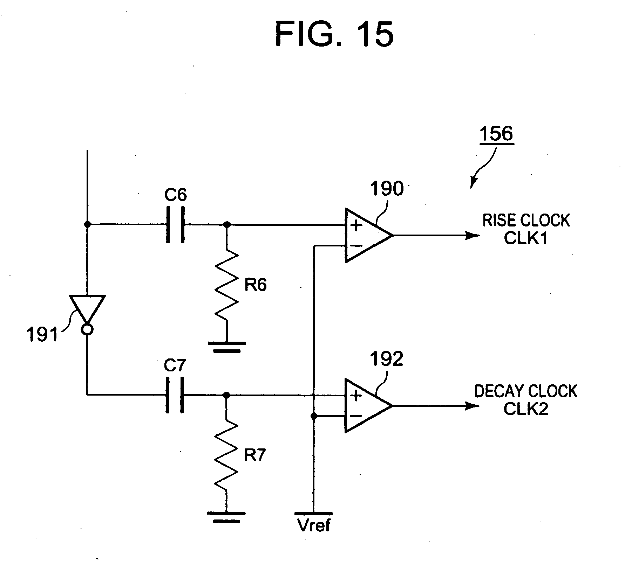

The rise and decay detection circuit 156 detects both rise and decay of the rectangular wave of the radio-frequency signal generator S1', and outputs a rise clock CLK1 which is a pulse output at the time of rise and a decay clock CLK2 which is a pulse output at the time of decay. FIG. 15 shows configuration of the rise and decay detection circuit 156.

As shown in FIG. 15, the rise and decay detection circuit 156 comprises a condenser C6, a resistance R6, a comparator 190, an inverter 191, a condenser C7, a resistance R7 and a comparator 192. The condenser C6 and resistance R6 constitute a differential circuit, and the output thereof is applied to a plus input terminal of the comparator 190. Reference voltage Vref is applied to a minus input terminal of the comparator 190. The condenser C7 and resistance R7 constitute another differential circuit. Rectangular wave inverted by the inverter 191 is applied to the differential circuit. Output of the differential circuit is applied to a plus input terminal of the comparator 192. Reference voltage Vref is also applied to a minus input terminal of the comparator 192.

The rise clock CLK1 controls the switch SW1 of the sample-hold circuit 158. When the rise clock CLK1 is at high level, the switch SW1 is closed and a signal from the condenser C4 is lead to the sample-hold circuit 158. The decay clock CLK2 controls the switch SW2. When the decay clock CLK2 is at high level, the switch SW2 is closed and reference voltage Vref charges the condenser C4.

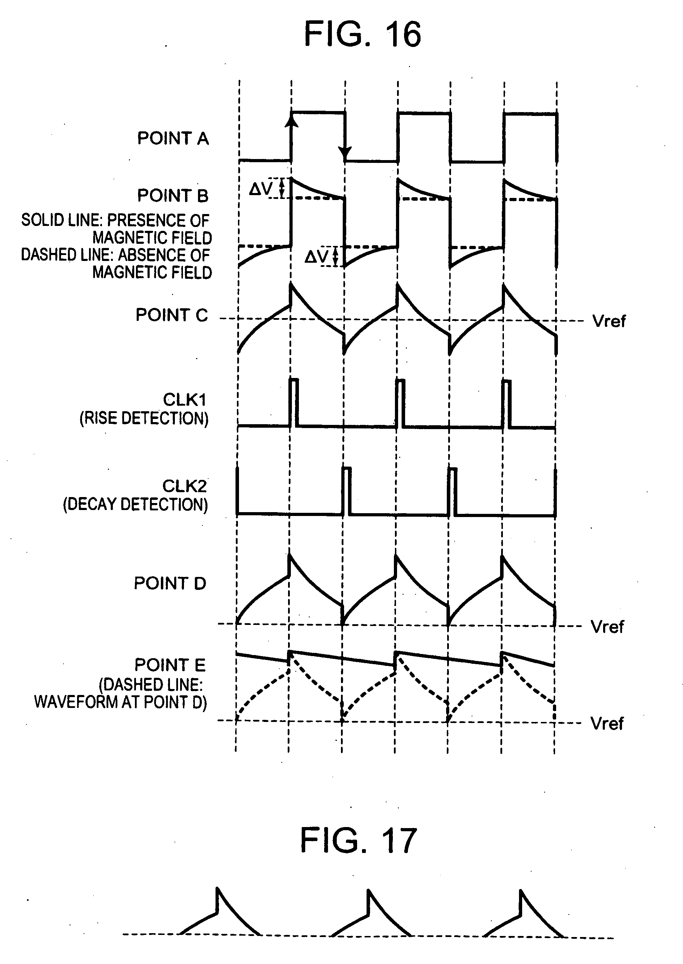

Hereinafter, operation of the eighth embodiment is described in more detail with reference to FIG. 16 which shows waveform at each point of the antenna circuit shown in FIG. 14. As shown in FIG. 16, a level-adjusted wave of the rectangular wave of the radio-frequency signal generator S1' is observed at point A located between the resistance R3 and R4. At point B, similar waveform to that at point A shown as a dashed line is observed in the absence of magnetic field. When the MI magnetic sensor detects magnetic field, the waveform is changed to a form shown as a solid line. The differential amplifier 154 can retrieve the changed portion according to the detection of magnetic field at point B (see point C of FIG. 16). Since the MI magnetic sensor drives by using high-frequency component at rise and decay of the radio-frequency signal, change at the edge portions is particularly remarkable.

At the timing when the CLK2 of rise detection becomes at high level, output of the differential amplifier 154 (see point C) is charged in the condenser C2, and the signal having its center at Vref is clamped to be Vref reference, i.e. clamped so that the lowest level is Vref. By this clamp, both changes at rise and decay edges of output of the differential amplifier 154 can be retrieved. For example, when the output of the differential amplifier 154 is only half-wave (or full-wave) rectified and integrated, only the changed portion at the rising portion is retrieved. Thus, output level of the detected signal lowers and detection sensitivity decreases. On the other hand, according to the present embodiment, both changed portions at rise and decay can be retrieved. Thus, output level of the detected signal becomes high.

When the rise clock CLK1 controls the switch SW1, the sample-hold circuit 158 detects a peak value of the clamped waveform. Thus, detection is performed. The detected output is represented as a waveform at point E.

According to the eighth embodiment, decay of the radio-frequency signal output from the radio-frequency signal generator is detected. At the detected timing, output of the differential amplifier, i.e. changed portion according to detected magnetic field change, is clamped. Accordingly, it becomes possible to increase output level of the detection.

[Ninth embodiment]

[Internal configuration]

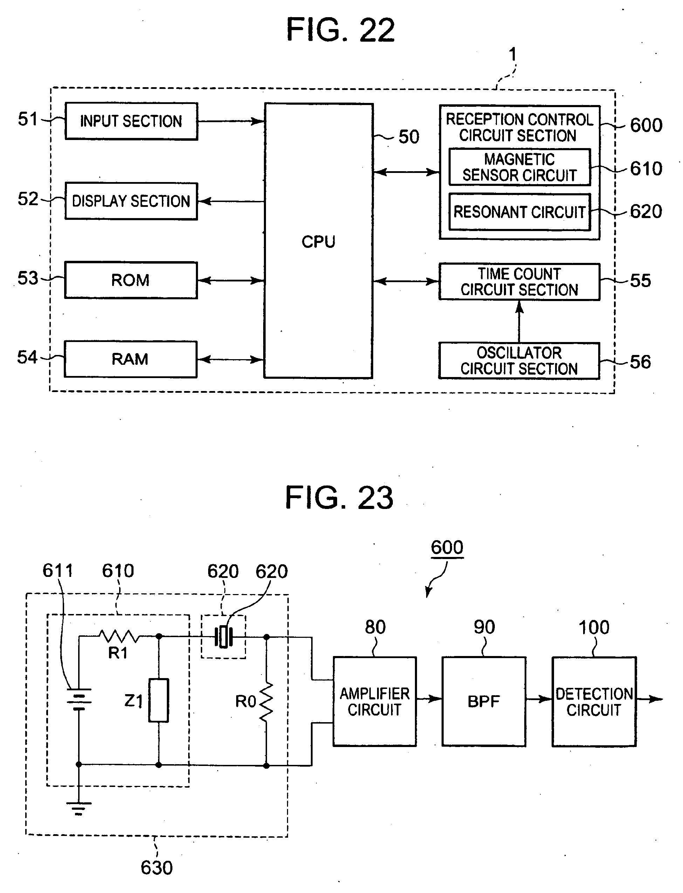

FIG. 22 is a block diagram showing internal configuration of the wrist watch 1. The element having the same configuration as that in FIG. 3 is represented by the same reference numeral, and the explanation thereof is omitted.

The reception control circuit section 600 includes a magnetic sensor circuit 610 and a resonant circuit 620, retrieves a signal of predetermined frequency by cutting off the unnecessary frequency component of the received signal, converts the frequency signal to a corresponding electric signal, and outputs it to a CPU 50.

FIG. 23 shows circuit configuration of the reception control circuit section 600. In FIG. 23, the reception control circuit section 600 comprises a magnetic sensor circuit 610, a resonant circuit 620, a resistance R0, a amplifier circuit 80, a filter circuit 90 and a detector circuit 100. The magnetic sensor circuit 610, resonant circuit 620 and resistance R0 constitute an antenna apparatus 630.

The magnetic sensor circuit 610 is a magnetic sensor utilizing magnetoresistance effect, and comprises a DC power source 611, a resistance R1 and a magnetoresistance element Z1.

In the magnetic sensor circuit 610, magnetic field change becomes detectable when the DC power source 611 applies DC voltage to the magnetoresistance element Z1. That is, when external magnetic field changes, magnetoresistance of the magnetoresistance element Z1 changes. Accordingly, a voltage across the magnetoresistance element 612 changes. This change in voltage across the magnetoresistance element Z1 is a signal of magnetic field change detected by the magnetic sensor circuit 610.

The resonant circuit 620 comprises a resonant element 621 made of quartz (crystal), and installed at the later stage of the magnetic sensor circuit 610. The resonant element is not limited to quartz, and can be made of ceramic. According to resonance effect of the resonant circuit 620, intended magnetic field change according to standard frequency broadcast is retrieved from the magnetic field change detected by the magnetic sensor circuit 610.

That is, at a resonance point, since impedance of the resonant circuit 620 is sufficiently low, a voltage according to output voltage of the magnetic sensor circuit 610 and the resistance R0 is output as a received signal of the antenna apparatus 630. Out of the resonance point, impedance of the resonant circuit 620 increases drastically. Thus, output signal of the antenna apparatus 630 becomes extremely low. As a result, magnetic field change only at resonant frequency of the resonant circuit 620 is output as the received signal of the antenna apparatus 630.

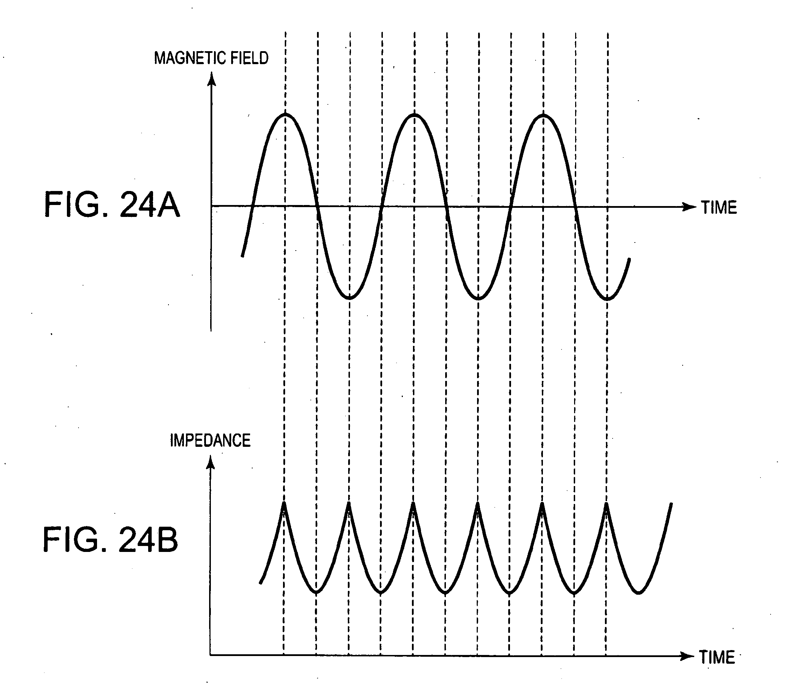

The resonant frequency of the resonant circuit 620 is configured to be twice as much as carrier frequency of the intended standard frequency broadcast. The reason is as follows. Magnetic field caused by standard frequency broadcast which is AC electric wave changes its direction and intensity periodically according to time as shown in the graph of FIG. 24A. The impedance of the magnetoresistance element Z1 changes as shown in FIG. 24B according to the magnetic field shown in FIG. 24A. That is, impedance of the magnetoresisntance element 612 changes only according to intensity of magnetic field regardless of direction of the magnetic field. Thus, the impedance folds back at the magnetic field of 0, and changes 1/2 cycle of that of standard frequency broadcast. Accordingly, the antenna apparatus 630 receives only the standard frequency broadcast by setting the resonant frequency of the resonant circuit 620 to be twice as much as the carrier frequency of the intended standard frequency broadcast.

The amplifier circuit 80 amplifies and outputs a signal input from the antenna apparatus 630. The filter circuit 90 passes through a signal within a predetermined frequency range and cuts off the frequency component without the range, among the signal input from the amplifier 80. The detector circuit 100 detects and outputs a signal input from the filter circuit 650. The detected signal output from the detector circuit 100 is input to the CPU 50, and is utilized to correct the current time and the like.

According to the present embodiment, the antenna apparatus 630 can be downsized by employing the magnetic sensor 610 utilizing a magnetoresistance effect and the resonant circuit 620. Further, since the magnetoresistance element 612 is an antenna to receive standard frequency broadcast, dimagnetic field does not occur very much different from a conventional bar antenna. Thus, deterioration of receiving sensitivity is small.

[Modification]

The present invention is not limited to the above-described embodiments, and can be modified within the sprit of the present invention.

(A) Resonant circuit

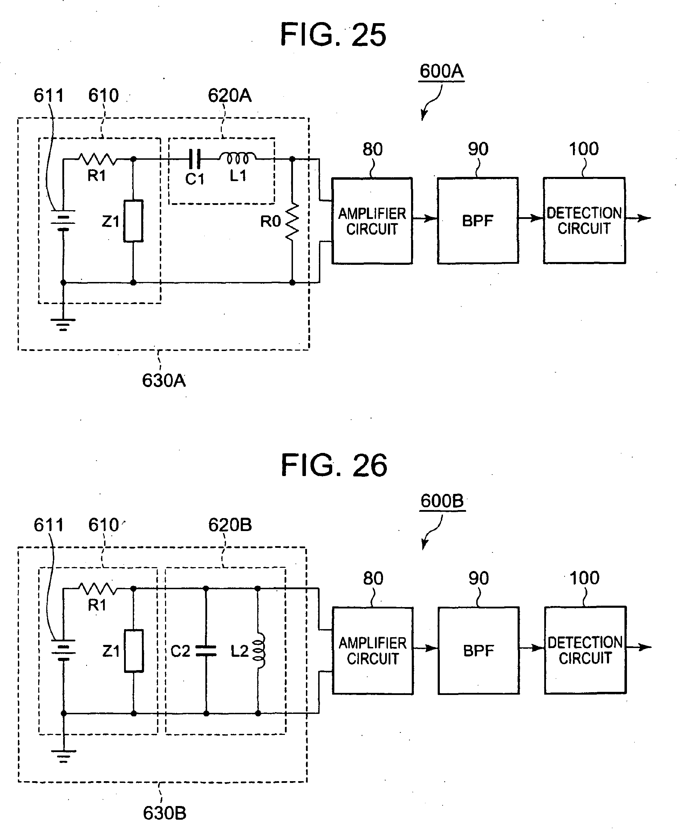

In the above-described embodiments, the resonant circuit 620 is composed of a resonant element 621 made of quartz or the like. However, the resonant circuit 620 also may be a LC resonant circuit. FIG. 25 shows circuit configuration of the reception control circuit 600A to which a LC resonant circuit is employed. In FIG. 25, an element as same as that of the reception control circuit section 600 is represent by the same reference numeral. As shown in FIG. 23, the reception control circuit section 600A comprises a magnetic sensor circuit 610, a resonant circuit 620A, a resistance R0, a amplifier circuit 80, a filter circuit 90 and a detector circuit 100. The magnetic sensor circuit 610, resonant circuit 620A and resistance R0 constitute an antenna apparatus 630A.

The resonant circuit 620A is a LC resonant circuit comprising a condenser C1 and an inductor L1 connected in series. The resonant frequency of the resonant circuit 620A is set to be twice as much as the carrier frequency of the intended standard frequency broadcast.

An antiresonant circuit (parallel resonant circuit) can be used instead of the resonant circuit. FIG. 26 shows circuit configuration of a reception control circuit section 600B using an antiresonat circuit. As shown in FIG. 26, the reception control circuit section 600B comprises a magnetic sensor circuit 610, an antiresonant circuit 620B, an amplifier circuit 80, a filter circuit 90 and a detection circuit 100. The magnetic sensor 610 and antiresonant circuit 620B constitute an antenna apparatus 630B.

The antiresonant circuit 620B is an LC resonant circuit comprising a condenser C2 and an inductor L2 connected in parallel, and is connected with the magnetic sensor circuit 610 in parallel. The antiresonant circuit 620B may comprise a predetermined antiresonant element instead of the LC antiresonant circuit.

The impedance of the antiresonant circuit 620B is sufficiently high at a resonance point, and then an output signal of the magnetic sensor 610 is output as the received signal of the antenna apparatus 630B. Out of the resonance point, since the impedance of the antiresonant circuit 620B drastically decreases, the output signal of the antenna apparatus 630B becomes extremely low. Further, the resonant frequency of the antiresonant circuit 620B is set to be twice as much as carrier frequency of the intended standard frequency broadcast, since the magnetoresistance value of the magnetoresisntace element Z1 changes only in accordance with intensity of magnetic field. As a result, it becomes possible to allow the antenna apparatus 630B to receive only the standard frequency broadcast.

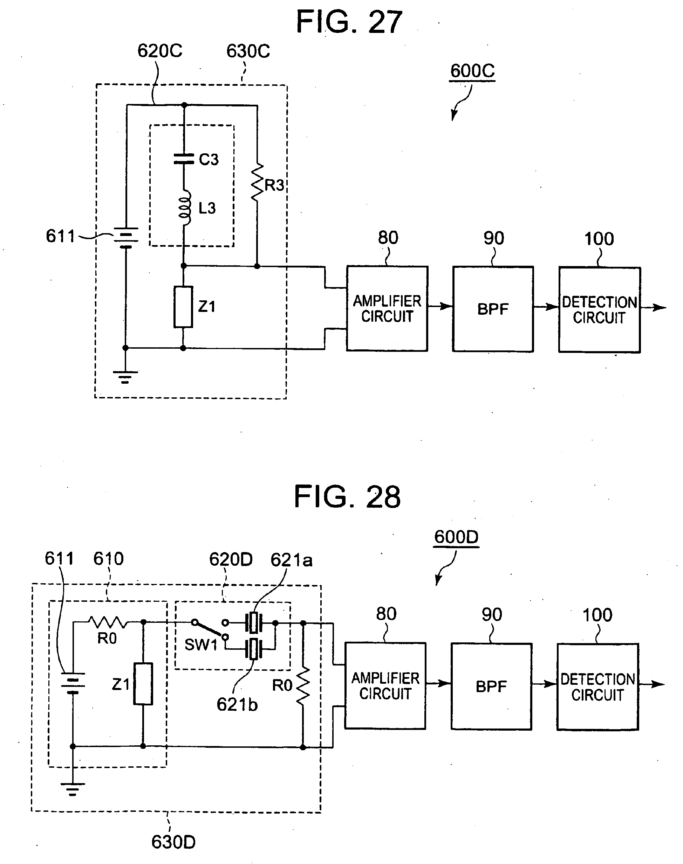

The magnetic sensor and resonant circuit may be connected in series. FIG. 27 shows a circuit configuration of a reception control circuit section 600C in which a magnetic sensor and resonant circuit are connected in series. As shown in FIG. 27, the reception control circuit section 600C comprises a DC power source 611, a magnetoresistance element Z1, a resonant circuit 620C, a resistance R3, an amplifier circuit 80, a filter circuit 90 and a detection circuit 100. The DC power source 611, magnetoresistance element Z1, resonant circuit 620C and resistance R3 constitute an antenna apparatus 630C.

The resonant circuit 620C is an LC resonant circuit comprising a condenser C3 and an inductor L3 connected in series. The resonant circuit 620C and magnetoresistance element Z1 are connected in series, and the resonant circuit 620C and resistance R3 are connected in parallel. The DC power source 611 applies a constant voltage across the resonant circuit 620C and magnetoresistance element connected in series, and the voltage across the magnetoresistance element Z1 is output as the received signal of the antenna apparatus 630.

The impedance of the resonant circuit 620C is sufficiently low at a resonance point, and then a voltage corresponding to a ratio between the resistance R0 and magnetoresistance element Z1 is output as the received signal of the antenna apparatus 630C. Out of the resonance point, since the impedance of the resonant circuit 620C is sufficiently high, the output signal of the antenna apparatus 630C is extremely low. Further, the resonant frequency of the antiresonant circuit 620C is set to be twice as much as the carrier frequency of the intended standard frequency broadcast, since the magnetoresistance value of the magnetoresistance element Z1 changes only in accordance with intensity of magnetic field as described above. As a result, it becomes possible to allow the antenna apparatus 630C to receive only the standard frequency broadcast.

(B) Selection of receiving frequency

In the above-described embodiments, the standard frequency broadcast of predetermined frequency is received. However, a plurality of standard frequency broadcasts of different carrier frequencies may be received. Concretely, it realizes by switching resonant frequency of the resonant circuit.

For example, FIG. 28 is one example of a circuit configuration of a reception control circuit section 600D in which the modification is applied to the reception control circuit section 600 shown in FIG. 23. As shown in FIG. 28, the reception control circuit section 600D has a configuration that the resonant circuit 620 of the reception control circuit 600 is replaced with a resonant circuit 620D.

The resonant circuit 620D has a configuration that two oscillation elements 621a and 621b connected in parallel are connected with a switch SW1 in series. The oscillation elements 621a and 621b have different oscillation frequencies from each other. The switch SW1 switches a connection to connect one of the oscillation elements 621a and 621b, so as to switch the resonant frequency of the resonant circuit 620D. Thus, the reception control circuit section 600D can receive two standard frequency broadcasts of different frequencies.

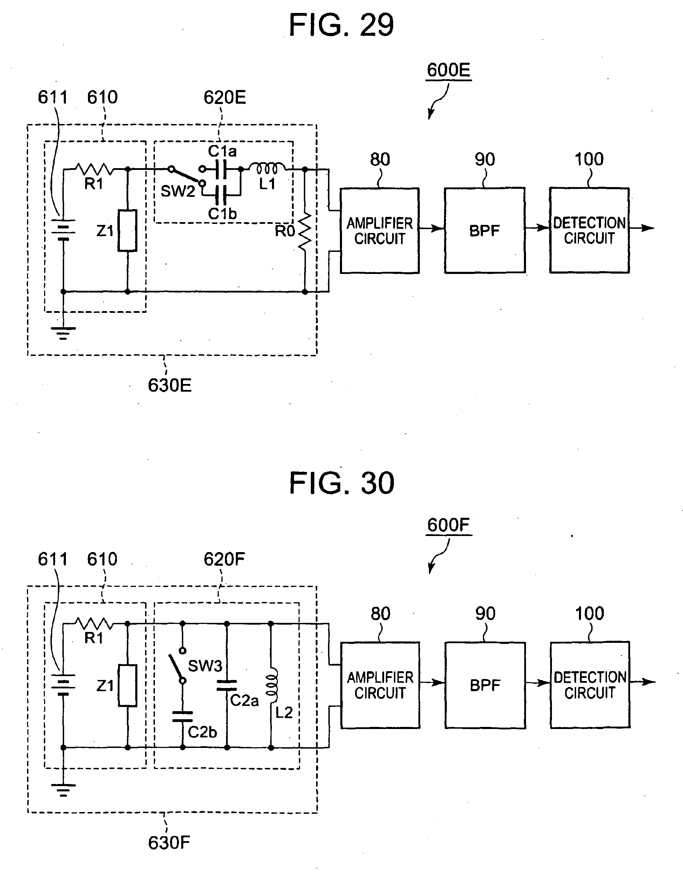

FIG. 29 shows one example of a circuit configuration of a reception control circuit section 600E in which the modification is applied to the reception control circuit section 600A shown in FIG. 25. As shown in FIG. 29, the reception control circuit section 600E has a configuration that the resonant circuit 620A of the reception control circuit section 600A is replaced with a resonant circuit 620E.

The resonant circuit 620E has a configuration that two condensers C1a and C1b connected in parallel are connected with an inductor L1 and switch SW2 in series. The condensers C1a and C1b have different capacities from each other. The switch SW2 switches a connection to connect one of the condensers C1a and C1b with the inductor L1 in series, so as to switch resonant frequency of the resonant circuit 620E. Thus, the reception control circuit section 600E can receive two standard frequency broadcasts of different frequencies.

FIG. 30 shows one example of a circuit configuration of a reception control circuit section 600F in which the modification is applied to the reception control circuit section 600B shown in FIG. 26. As shown in FIG. 30, the reception control circuit section 600F has a configuration that the antiresonant circuit 620B of the reception control circuit section 600B is replaced with an antiresonant circuit 620F.

The antiresonant circuit 620F has a configuration that two condensers C2a and C2b and an inductor L2 are connected in parallel and a switch SW3 is connected to the condenser C2b in series. The switch SW3 switches a connection to switch the resonant frequency of the antiresonant circuit 620F. Thus, the reception control circuit section 600F can receive two standard frequency broadcasts of different frequencies.

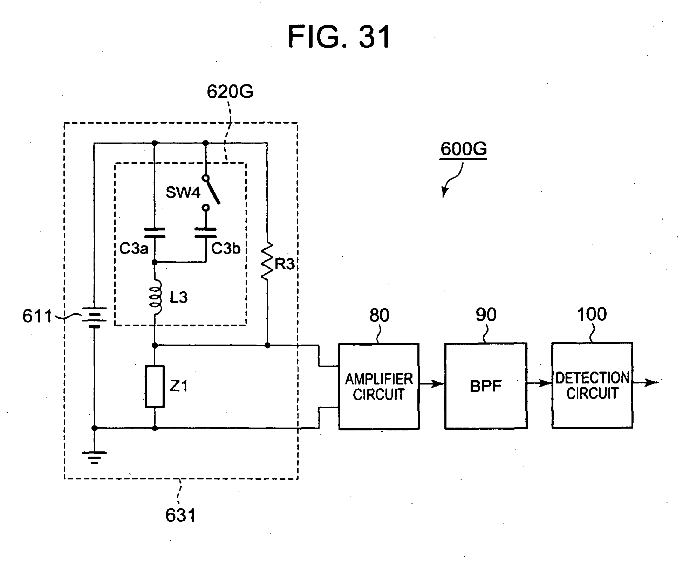

FIG. 31 shows one example of a circuit configuration of a reception control circuit section 600G in which the modification is applied to the reception control circuit section 600C shown in FIG. 27. As shown in FIG. 31, the reception control circuit section 600G has a configuration that a resonant circuit 620C of the reception control circuit section 600C is replaced with a resonant circuit 620G.

The resonant circuit 620G has a configuration that condensers C3a and C3b connected in parallel is connected to an inductor L3 in series and a switch SW4 is connected to the condenser C3b in series. The switch SW4 switches a connection to switch the resonant frequency of the resonant circuit 620G. Thus, the reception control circuit section 600G can receive two standard frequency broadcasts of different frequencies.

(C) Magnetoresistance element Z1

In the above-described embodiments, the magnetoresistance element Z1 is used in the magnetic sensor circuit 610. However, it may be a magnetic sensor using a spin tunneling magnetoresistance element or hall element, for example. When a hall element is used, resonant frequency of the resonant circuit can be equal to the carrier frequency of the intended standard frequency broadcast, since a hall element can detect direction and intensity of magnetic field.

The present invention is not limited to the above-described embodiments, and can be modified within the scope of the invention defined by the claims, and such modifications are also included in the scope of the present invention.

For example, in the first and second embodiments, level of an inversion signal of a radio-frequency signal which is applied to an adder can be adjusted with a resistance or the like.

Further, in the first and seventh embodiments, a radio-frequency signal generator S1' to generate rectangular wave can be used instead of the radio-frequency signal generator S1 to output a sine-wave radio-frequency signal, like the eight embodiment.

**Claims**

1. An antenna apparatus comprising:

   a magnetic field detecting unit (Z1) having an electric property which changes in accordance with a magnetic field change; and
   a radio-frequency signal generating unit (S1) to apply a radio-frequency signal to the magnetic field detecting unit;

   **characterized by**
   comprising a signal reducing unit (92, 94, 102, 104, R3, R4, 114, 124) to reduce a level of the radio-frequency signal component contained in a received signal obtained by the magnetic field detecting unit and the radio-frequency signal generating unit, and a detecting unit (D1, D2, 60, 126) to detect the received signal in which the radio-frequency signal has been reduced.

2. The antenna apparatus according to claim 1, wherein the signal reducing unit (92, 94, 102, 104, R3, R4, 114, 124) takes in the received signal from the magnetic field detecting unit (Z1) and the radio-frequency signal from the radio-frequency signal generating unit (S1), so as to output the received signal where the level of the radio-frequency signal component contained in the received signal is reduced.

3. The antenna apparatus according to claim 1 or 2, wherein the signal reducing unit comprises:

   an inverter (92, 102) to invert the radio-frequency signal or a level-adjusted radio-frequency signal; and
   an adder (94, 104) to add the received signal and the inverted radio-frequency signal output from the inverter.

4. The antenna apparatus according to claim 1 or 2, wherein the signal reducing unit comprises:

   a differential amplifier (R3, R4, 114, 124) to take in the received signal and the radio-frequency signal or a level-adjusted radio-frequency signal, so as to output a difference between the received signal and the radio-frequency signal or a level-adjusted radio-frequency signal.

5. The antenna apparatus according to claim 1 or 2, wherein the detecting unit comprises:

   a synchronous detection circuit (60) to take in the radio-frequency signal or a level-adjusted radio-frequency signal and to perform a synchronous detection with the taken-in signal.

6. The antenna apparatus according to claim 5, wherein the detecting unit comprises:

a rectangular wave generating unit (126) to take in the radio-frequency signal or a level-adjusted radio-frequency signal so as to generate a rectangular wave with the taken-in signal, and the synchronous detection is performed with the rectangular wave.

7. The antenna apparatus according to claim 4, further comprising:

a rise and decay detecting unit (156) to detect a rise and a decay of the radio-frequency signal and to output a rise pulse and a decay pulse indicating the rise and the decay respectively;
a clamp unit (C4) to clamp an output of the differential amplifier to a predetermined reference voltage based on the decay pulse; and
a sample-hold unit (158) to sample and hold the clamped signal based on the decay pulse.

8. A watch comprising:

the antenna apparatus according to claim 1 or 2;
a amplifier unit (80) to amplify a signal obtained by the antenna apparatus, the signal corresponding to a standard frequency broadcast including time information;
a detecting unit (90, 100) to detect a signal output from the amplifier unit so as to output a demodulated signal;
a time information extracting unit (50) to extract the time information from the demodulated signal;
a time counting unit (55) to count time;
a time display unit (56) to display the time counted by the time counting unit; and
a time correcting unit (50) to correct the time counted by the time counting unit based on the time information extracted by the time information extracting unit.

9. A receiving apparatus comprising:

the antenna apparatus (630) according to claim 1 or 2;
an amplifier unit (80) to amplify a magnetic field change of a predetermined frequency retrieved as an electric signal by the antenna apparatus, so as to amplify the retrieved electric signal as a received signal of an electric wave of the predetermined frequency; and
a detecting unit (90, 100) to detect and output the received signal amplified by the amplifier unit.

10. A watch comprising:

a receiving apparatus (600) according to claim 9;
a time counting unit (55) to count time;
a time display unit (56) to display the time counted by the time counting unit;
a time information extracting unit (50) to extract time information from the received signal output from the detecting unit; and
a time correcting unit (50) to correct the time counted by the time counting unit based on the time information extracted by the time information extracting unit.

**Patentansprüche**

1. Antennenvorrichtung, umfassend:

eine Magnetfelderkennungseinheit (Z1), bei der sich eine elektrische Eigenschaft gemäß einer Magnetfeldänderung ändert; und
eine Radiofrequenzsignal-Erzeugungseinheit (S1) zum Anlegen eines Radiofrequenzsignals an die Magnetfelderkennungseinheit;
**gekennzeichnet durch**
eine Signalreduktionseinheit (92, 94, 102, 104, R3, R4, 114, 124) zum Reduzieren eines Pegels der Radiofrequenzsignalkomponente, die in einem empfangenen Signal enthalten ist, welches **durch** die Magnetfelderkennungseinheit und die Radiofrequenzsignal-Erzeugungseinheit erhalten wird, und
eine Erkennungseinheit (D1, D2, 60, 126) zum Erkennen des empfangenen Signals, in welchem das Radiofrequenzsignal reduziert worden ist.

2. Antennenvorrichtung nach Anspruch 1, wobei die Signalreduktionseinheit (92, 94, 102, 104, R3, R4, 114, 124) das empfangene Signal von der Magnetfelderkennungseinheit (Z1) und das Radiofrequenzsignal von der Radiofrequenzsignal-Erzeugungseinheit (S1) aufnimmt, um das empfangene Signal, bei dem der Pegel der in dem empfangenen Signal enthaltenen Radiofrequenzsignalkomponente reduziert ist, auszugeben.

3. Antennenvorrichtung nach Anspruch 1 oder 2, wobei die Signalreduktionseinheit umfasst:

   einen Inverter (92, 102) zum Invertieren des Radiofrequenzsignals oder eines pegelangepassten Radiofrequenzsignals; und
   einen Addierer (94, 104) zum Addieren des empfangenen Signals und des von dem Inverter ausgegebenen invertierten Radiofrequenzsignals.

4. Antennenvorrichtung nach Anspruch 1 oder 2, wobei die Signalreduktionseinheit umfasst:

   einen Differentialverstärker (R3, R4, 114, 124) zum Aufnehmen des empfangenen Signals und des Radiofrequenzsignals oder eines pegelangepassten Radiofrequenzsignals, um eine Differenz zwischen dem empfangenen Signal und dem Radiofrequenzsignal oder einem pegelangepassten Radiofrequenzsignal auszugeben.

5. Antennenvorrichtung nach Anspruch 1 oder 2, wobei die Erkennungseinheit umfasst:

   einen Synchron-Erkennungsschaltkreis (60) zum Aufnehmen des Radiofrequenzsignals oder eines pegelangepassten Radiofrequenzsignals und Ausführen einer synchronen Erkennung mit dem aufgenommenen Signal.

6. Antennenvorrichtung nach Anspruch 5, wobei die Erkennungseinheit umfasst:

   eine Rechteckwellenerzeugungseinheit (126) zum Aufnehmen des Radiofrequenzsignals oder eines pegelangepassten Radiofrequenzsignals, um eine Rechteckwelle mit dem aufgenommenen Signal zu erzeugen, und die synchrone Erkennung mit der Rechteckwelle durchgeführt wird.

7. Antennenvorrichtung nach Anspruch 4, weiterhin umfassend:

   eine Anstiegs- und Abfall-Erkennungseinheit (156) zum Erkennen eines Anstiegs und eines Abfallens des Radiofrequenzsignals und zum Ausgeben eines Anstiegsimpulses und eines Abfallimpulses, die jeweils den Anstieg und das Abfallen anzeigen;
   eine Klemmeinheit (C4) zum Anklemmen eines Ausgangs des Differentialverstärkers an eine vorbestimmte Referenzspannung, basierend auf dem Abfallimpuls; und
   ein Abtast-Halte-Glied (158), um das angeklemmte Signal basierend auf dem Abfallimpuls abzutasten und zu halten.

8. Uhr, umfassend:

   die Antennenvorrichtung nach Anspruch 1 oder 2;
   eine Verstärkereinheit (80) zum Verstärken eines von der Antennenvorrichtung erhaltenen Signals, wobei das Signal einer Normalfrequenzübertragung entspricht, die Zeitinformation einschließt;
   eine Erkennungseinheit (90, 100) zum Erkennen eines von der Verstärkereinheit ausgegebenen Signals, um ein demoduliertes Signal auszugeben;
   eine Zeitinformations-Extraktionseinheit (50) zum Extrahieren der Zeitinformation aus dem demodulierten Signal;
   eine Zeitzähleinheit (55) zum Zählen von Zeit;
   eine Zeitanzeigeeinheit (56) zum Anzeigen der von der Zeitzähleinheit gezählten Zeit; und
   eine Zeitkorrektureinheit (50) zum Korrigieren der von der Zeitzähleinheit gezählten Zeit basierend auf der durch die Zeitinformations-Extraktionseinheit extrahierten Zeitinformation.

9. Empfangsvorrichtung, umfassend:

die Antennenvorrichtung (630) nach Anspruch 1 oder 2;
eine Verstärkereinheit (80) zum Verstärken einer Magnetfeldänderung einer vorbestimmten Frequenz, die als ein elektrisches Signal durch die Antennenvorrichtung gewonnen wurde, um das gewonnene elektrische Signal als ein empfangenes Signal einer elektrischen Welle der vorbestimmten Frequenz zu verstärken; und
eine Erkennungseinheit (90, 100) zum Erkennen und Ausgeben des durch die Verstärkereinheit verstärkten empfangenen Signals.

**10.** Uhr, umfassend:

eine Empfängervorrichtung (600) nach Anspruch 9;
eine Zeitzähleinheit (55) zum Zählen von Zeit;
eine Zeitanzeigeeinheit (56) zum Anzeigen der von der Zeitzähleinheit gezählten Zeit;
eine Zeitinformations-Extraktionseinheit (50) zum Extrahieren von Zeitinformation aus dem aus der Erkennungseinheit ausgegebenen empfangenen Signal; und
eine Zeitkorrektureinheit (50) zum Korrigieren der von der Zeitzähleinheit gezählten Zeit basierend auf der durch die Zeitinformations-Extraktionseinheit extrahierten Zeitinformation.

## Revendications

**1.** Système d'antenne comprenant:

une unité de détection de champ magnétique (Z1) ayant une propriété électrique qui change selon un changement de champ magnétique ; et
une unité de génération de signal radiofréquence (S1) destinée à appliquer un signal radiofréquence à l'unité de détection de champ magnétique ;
**caractérisé ce qu'**il comprend
une unité de réduction de signal (92, 94, 102, 104, R3, R4, 114, 124) destinée à réduire un niveau de la composante de signal radiofréquence contenue dans un signal reçu obtenu par l'unité de détection de champ magnétique et l'unité de génération de signal radiofréquence, et
une unité de détection (D1, D2, 60, 126) destinée à détecter le signal reçu dans lequel le signal radiofréquence a été réduit.

**2.** Système d'antenne selon la revendication 1, dans lequel l'unité de réduction de signal (92, 94, 102, 104, R3, R4, 114, 124) prend le signal reçu de la part de l'unité de détection de champ magnétique (Z1) et le signal radiofréquence provenant de l'unité de génération de signal radiofréquence (S1) de façon à transmettre le signal reçu dans lequel le niveau de la composante de signal radiofréquence contenue dans le signal reçu est réduit.

**3.** Système d'antenne selon la revendication 1 ou 2, dans lequel l'unité de réduction de signal comprend:

un inverseur (92, 102) destiné à inverser le signal radiofréquence ou un signal radiofréquence à niveau ajusté ; et
un additionneur (94, 104) destiné à additionner le signal reçu et le signal radiofréquence inversé transmis par l'inverseur.

**4.** Système d'antenne selon la revendication 1 ou 2, dans lequel l'unité de réduction de signal comprend :

un amplificateur différentiel (R3, R4, 114, 124) destiné à prendre le signal reçu et le signal radiofréquence ou un signal radiofréquence à niveau ajusté, de façon à transmettre une différence entre le signal reçu et le signal radiofréquence ou un signal radiofréquence à niveau ajusté.

**5.** Système d'antenne selon la revendication 1 ou 2, dans lequel l'unité de détection comprend :

un circuit de détection synchrone (60) destiné à prendre le signal radiofréquence ou un signal radiofréquence à niveau ajusté et à effectuer une détection synchrone avec le signal pris.

**6.** Système d'antenne selon la revendication 5, dans lequel l'unité de détection comprend :

une unité de génération d'onde rectangulaire (126) destinée à prendre le signal radiofréquence ou un signal radiofréquence à niveau ajusté de façon à générer une onde rectangulaire avec le signal pris, et la détection synchrone est effectuée avec l'onde rectangulaire.

7. Système d'antenne selon la revendication 4, comprenant en outre :

une unité de détection d'augmentation et de diminution (156) destinée à détecter une augmentation et une diminution du signal radiofréquence et à transmettre une impulsion d'augmentation et une impulsion de diminution indiquant l'augmentation et la diminution respectivement ;
une unité de blocage (C4) destinée à bloquer une sortie de l'amplificateur différentiel selon une tension de référence prédéterminée sur la base de l'impulsion de diminution ; et
une unité d'échantillonnage et de maintien (158) destinée à échantillonner et à maintenir le signal bloqué sur la base de l'impulsion de diminution.

8. Montre comprenant :

le système d'antenne selon la revendication 1 ou 2 ;
une unité d'amplificateur (80) destinée à amplifier un signal obtenu par le système d'antenne, le signal correspondant à une diffusion de fréquence standard comprenant des informations temporelles ;
une unité de détection (90, 100) destinée à détecter un signal transmis par l'unité d'amplificateur de façon à transmettre un signal démodulé ;
une unité d'extraction d'informations temporelles (50) destinée à extraire les informations temporelles du signal démodulé ;
une unité de décompte de la durée (55) destinée à décompter la durée ;
une unité d'affichage de la durée (56) destinée à afficher la durée décomptée par l'unité de décompte de la durée ; et
une unité de correction de la durée (50) destiné à corriger la durée décomptée par l'unité de décompte de la durée sur la base des informations temporelles extraites par l'unité d'extraction d'informations temporelles.

9. Appareil de réception comprenant :

le système d'antenne (630) selon la revendication 1 ou 2 ;
une unité d'amplificateur (80) destinée à amplifier un changement de champ magnétique ayant une fréquence prédéterminée recherché en tant que signal électrique par le système d'antenne, de façon à amplifier le signal électrique recherché comme un signal reçu d'une onde électrique ayant la fréquence prédéterminée ; et
une unité de détection (90, 100) destinée à détecter et à transmettre le signal reçu amplifié par l'unité d'amplificateur.

10. Montre comprenant :

un appareil de réception (600) selon la revendication 9 ;
une unité de décompte de la durée (55) destinée à décompter la durée ;
une unité d'affichage de la durée (56) destinée à afficher la durée décomptée par l'unité de décompte de la durée ;
une unité d'extraction d'informations temporelles (50) destinée à extraire les informations temporelles du signal reçu transmis par l'unité de détection ; et
une unité de correction de la durée (50) destinée à corriger la durée décomptée par l'unité de décompte de la durée sur la base des informations temporelles extraites par l'unité d'extraction d'informations temporelles.

# FIG. 1

# FIG. 2

21  13  24  23b  23a  25  26a          23  12  23b,40    10

15  22  28  27  26  14    30

6 O'CLOCK ←——→ 12 O'CLOCK

EP 1 783 860 B1

# FIG. 3

- INPUT SECTION — 51
- DISPLAY SECTION — 52
- ROM — 53
- RAM — 54

- CPU — 50

- RECEPTION CIRCUIT — 41
  - ANTENNA CIRCUIT — 42
- TIME COUNT CIRCUIT SECTION — 55
- OSCILLATOR CIRCUIT SECTION — 56

# FIG. 4

ANTENNA CIRCUIT (42) → FILTER CIRCUIT (70) → AMPLIFIER CIRCUIT (80) → BPF (90) → DETECTION CIRCUIT (100) → TO CPU 50

# FIG. 5

EP 1 783 860 B1

# FIG. 6A

LEVEL

600

602

601

604

603

FREQUENCY

# FIG. 6B

LEVEL

611

614

FREQUENCY

## FIG. 7

## FIG. 8

# FIG. 9

EP 1 783 860 B1

# FIG. 10

# FIG. 11

EP 1 783 860 B1

# FIG. 12

# FIG. 13

# FIG. 14

EP 1 783 860 B1

# FIG. 15

# FIG. 16

POINT A

POINT B

SOLID LINE: PRESENCE OF
MAGNETIC FIELD
DASHED LINE: ABSENCE OF
MAGNETIC FIELD

$\Delta V$

$\Delta V$

POINT C

Vref

CLK1
(RISE DETECTION)

CLK2
(DECAY DETECTION)

POINT D

Vref

POINT E
(DASHED LINE:
WAVEFORM AT POINT D)

Vref

# FIG. 17

# FIG. 18

EP 1 783 860 B1

# FIG. 19A

IMPEDANCE

−
MAGNETIC
FIELD

0

+
MAGNETIC
FIELD

# FIG. 19B

IMPEDANCE

1901

−
MAGNETIC
FIELD

0

+
MAGNETIC
FIELD

# FIG. 20A

2001

2002

# FIG. 20B

2010

2011

2012

FREQUENCY

# FIG. 21

EP 1 783 860 B1

# FIG. 22

```
1

┌─────────────────────────────────────────────────────────────────────┐
│                                                                       │
│ 51  ┌────────────────┐        ┌──────┐        ┌──────────────────┐    │
│     │ INPUT SECTION  │──────▶ │      │ ~50    │ RECEPTION CONTROL │ 600│
│     └────────────────┘        │      │        │ CIRCUIT SECTION   │    │
│                               │      │        │ ┌──────────────┐  │    │
│ 52  ┌────────────────┐        │      │ ◀─────▶│ │  MAGNETIC    │  │ 610│
│     │ DISPLAY SECTION│◀────── │      │        │ │ SENSOR CIRCUIT│ │    │
│     └────────────────┘        │ CPU  │        │ └──────────────┘  │    │
│                               │      │        │ ┌──────────────┐  │    │
│ 53  ┌────────────────┐        │      │        │ │RESONANT CIRCUIT│ │620│
│     │      ROM       │◀─────▶ │      │        │ └──────────────┘  │    │
│     └────────────────┘        │      │ ◀─────▶│ TIME COUNT        │ 55 │
│                               │      │        │ CIRCUIT SECTION   │    │
│ 54  ┌────────────────┐        │      │        └──────────────────┘    │
│     │      RAM       │◀─────▶ │      │          ▲                      │
│     └────────────────┘        └──────┘        ┌──────────────────┐    │
│                                               │   OSCILLATOR      │ 56 │
│                                               │ CIRCUIT SECTION   │    │
│                                               └──────────────────┘    │
└─────────────────────────────────────────────────────────────────────┘
```

# FIG. 23

```
                                                    600

  611   610        620  620           80           90          100

  ┌─────────────────────────┐     ┌──────────┐  ┌──────┐  ┌───────────┐
  │    R1                    │     │          │  │      │  │           │
  │  ──/\/\──┬──  ┤├  ──┬──  │────▶│ AMPLIFIER│─▶│ BPF  │─▶│ DETECTION │──▶
  │  ═       │ Z1    R0 │     │     │ CIRCUIT  │  │      │  │  CIRCUIT  │
  │          │          │     │     └──────────┘  └──────┘  └───────────┘
  │  ───┴────┴──────────┴──── │
  │   ─┴─                     │
  └─────────────────────────┘
                 630
```

MAGNETIC FIELD

FIG. 24A

TIME

IMPEDANCE

FIG. 24B

TIME

EP 1 783 860 B1

33

# FIG. 25

600A

611  610  620A

R1

C1  L1

Z1

R0

630A

| 80 | 90 | 100 |
|---|---|---|
| AMPLIFIER CIRCUIT | BPF | DETECTION CIRCUIT |

# FIG. 26

600B

611  610  620B

R1

Z1

C2  L2

630B

| 80 | 90 | 100 |
|---|---|---|
| AMPLIFIER CIRCUIT | BPF | DETECTION CIRCUIT |

# FIG. 27

# FIG. 28

# FIG. 29

# FIG. 30

# FIG. 31

**EP 1 783 860 B1**

**REFERENCES CITED IN THE DESCRIPTION**

**Patent documents cited in the description**

- EP 0777127 A2
- US 6232775 B1
- JP 2000 A
- JP 188558 A
- JP 2000188558 A